# EUROPEAN PATENT SPECIFICATION

(11) **EP 3 174 290 B1**
(45) Date of publication and mention of the grant of the patent: **08.05.2024**
(21) Application number: 15197104.1
(22) Date of filing: 30.11.2015
(51) Int. Cl.: H04N 7/18, B61L 23/00

(54) **METHOD FOR GENERATING AN ENHANCED VIDEO SIGNAL AND PROVIDING THE ENHANCED VIDEO SIGNAL TO THE DRIVER OF A VEHICLE THAT IS MOVING AT A CERTAIN SPEED, SYSTEM FOR GENERATING AN ENHANCED VIDEO SIGNAL, PROGRAM AND COMPUTER PROGRAM PRODUCT**
VERFAHREN ZUR ERZEUGUNG EINES VERBESSERTEN VIDEOSIGNALS UND BEREITSTELLUNG DES VERBESSERTEN VIDEOSIGNALS AN DEN FAHRER EINES SICH MIT EINER BESTIMMTEN GESCHWINDIGKEIT BEWEGENDEN FAHRZEUGS, SYSTEM ZUR ERZEUGUNG EINES VERBESSERTEN VIDEOSIGNALS, PROGRAMM UND COMPUTERPROGRAMMPRODUKT
PROCÉDÉ DE GÉNÉRATION D'UN SIGNAL VIDÉO AMÉLIORÉ ET DE FOURNITURE DE SIGNAL VIDÉO AMÉLIORÉ POUR LE CONDUCTEUR D'UN VÉHICULE SE DÉPLAÇANT À UNE CERTAINE VITESSE, SYSTÈME DE GÉNÉRATION D'UN SIGNAL VIDÉO AMÉLIORÉ, PROGRAMME INFORMATIQUE ET PRODUIT LOGICIEL

(43) Date of publication of application: 31.05.2017
(73) Proprietor: Deutsche Telekom AG, 53113 Bonn (DE)
(72) Inventor: BREITBACH, Johannes Markus, 53227 Bonn (DE); FRISCH, Andreas, 53757 Sankt Augustin (DE)
(74) Representative: Schwöbel, Thilo K.

(56) References cited:
- DE-A1-102004 032 338
- US-A1- 2011 058 041

## Description

### BACKGROUND

The present invention relates a method for generating an enhanced video signal and providing the enhanced video signal to the driver of a vehicle that is moving at a certain speed, wherein the enhanced video signal comprises a plurality of pieces of image information associated to a plurality of locations.

Furthermore, the present invention relates to a system for generating an enhanced video signal and providing the enhanced video signal to the driver of a vehicle that is moving at a certain speed, wherein the system comprises the vehicle and a plurality of camera devices, wherein the enhanced video signal comprises a plurality of pieces of image information associated to a plurality of locations.

Furthermore, the present invention relates to a program and to a computer program product for generating an enhanced video signal and providing the enhanced video signal to the driver of a vehicle that is moving at a certain speed, according to the inventive method and system.

Video signals that represent movements (within or relative to a scenery) are typically realized by moving a camera device. Otherwise the range of displaying such movement is rather limited, e.g., it would be possible to use, for a given overall video sequence, a plurality of (stationary) camera devices located at different locations, however this will typically not result in a continuous movement but result in a plurality of "cuts" and breaks in the represented movement. This is why such video sequences (comprising cuts and breaks in the represented movement) are not easily usable, e.g., to be provided to a human operator with the aim to continuously monitor, e.g., portions of a rail track ahead of the current field of view of the operator. This means that actions of such a human operator (e.g. breaking a train or other vehicle) are mainly based on events detectable from the current field of view of the operator of the train or other vehicle. In this context document US 2011/058041 A1 discloses a route monitoring system in which the camera records video data related to a route section on which the vehicle travels and the control device displays the video data one the basis of the present vehicle location. Document DE 10 2004 032 338 A1 discloses a monitoring method based on cameras that are activated by the approaching train, so that the operator of the train is able to view the section covered by the camera before it comes into his or her direct field of vision.

### SUMMARY

It is an object of the present invention to generate enhanced video signals to provide such video signals to the driver of a vehicle that is moving at a certain speed, such that the effective field of view of an operator of a train or other vehicle can be increased, especially beyond the field of view that is optically reasonably detectable by an operator or driver of the train or other vehicle, such that the likelihood of accidents can be reduced, the available reaction time increased, and the efforts required to drive the train or other vehicle reduced.

The object of the present invention is achieved by a method according to claim 1.

It is thereby advantageously possible according to the present invention that the driver of the vehicle (being located at the first location) is provided - at the first point in time - with image information, generated by the plurality of camera devices, of the second location, even though the driver of the vehicle could not overlook the second location while being located (with the vehicle) at the first location. According to the present invention, this is possible by means of positioning the plurality of camera devices at the plurality of locations such that the difference between the first location and the second location can be chosen easily and appropriately regarding the needs in a specific situation.

According to the present invention, one aspect relates to overcoming the limitations of a video stream, or a video sequence comprising cuts and breaks caused by different locations of the plurality of camera devices used. According to the present invention, an ongoing video stream, simulating a continuous movement through an area, is produced or generated based on the video streams generated by a number of fixedly installed video cameras. According to the present invention, from the perspective of a user, the impression of a camera perspective is given without an interruption or a jump, or at least without substantial interruptions or a jumps. This is achieved by the combination of video streams of different cameras and a production of a sequence based on only fractions of the video information of each camera in line with the simulated movement. For this purpose each of the involved video cameras produces a video stream only for a sector of the entire area. Furthermore, due to their fixed installation, the camera devices provide a video information with one camera angle for the supervised sector. After applying the steps of the inventive methods, a video signal results, which is based on a number of single video streams from different camera devices, but works like (or provides the impression of) an ongoing video stream similar to a recording of only one camera device that is moving - along with the train or other vehicle - through the predefined sector or along the plurality of locations.

According to an aspect of the present invention, an additional option is provided in cases such that video display provides an adequate measure or means to control an area while the viewer (or driver or operator of the train or other vehicle) moves through such an area, but for whatever reason (such as, e.g., due to bends or turns of the track or (probable) path of movement of the train or other vehicle or due to a comparatively high speed of the train or other vehicle or due to a comparatively long breaking distance of the train or other vehicle), a camera device which is directly installed with the viewer (or with the train or other vehicle) does not provide sufficient information or cannot fulfill the purpose of a forward looking perspective into the area of movement, i.e. the plurality of locations.

According to the present invention, an appropriate example is the control of high speed trains, but the invention is not limited thereto. Due to size and speed, the perspective of the driver (or operator of the train) is not sufficient anymore to allow any action (especially an emergency breaking action) when something unpredicted is spotted on the track ahead of the train. For this reason, a supervision ahead of the train is appropriate, which has to change in line with the movement of the train. To make description more tangible, this example of a high speed train is often used in the context of the present invention; however, the present invention is not limited to this use case but can be applied - mutatis mutandis - to other use cases as well while especially maintaining the principles of video processing mentioned in the context of the present description.

According to the present invention, an ongoing video stream, simulating a continuous movement through an area based on the video streams from a number of fixed installed video cameras, is generated and provided to the driver of a vehicle such as especially a train or another vehicle. Each of such video cameras (or camera devices) produces a video stream only for a specific section of the entire area, furthermore due to their fixed installation they provide a video with one single (or defined) camera angle for the supervised sector.

According to the present invention, the inventive method and system provides:
-- a forward looking delivery of content, and recognizing the location of the viewer and providing the related content:
   While moving through an area (i.e. first at the first location, but later also at the second location or plurality of other locations), the viewer (especially a driver of a train or other vehicle) has a perspective based on his or her direct view from his or her eyes on the scenery in front of him or her. However, the relevant perspective may be ahead in other sectors which will be passed (by the vehicle, i.e. the train or other vehicle) in the close future, but are currently out of sight. To display or provide a visual representation of the relevant perspective in line with the movement of the viewer (i.e. of the vehicle), the perspective jumps from one camera supervised sector to the next parallel to the user's (i.e. driver's, and hence also of the vehicle) movement through the plurality of sectors (i.e. the plurality of locations). In consequence according to the present invention, the distance between the location of the viewer and the display sector / the forward looking perspective will be kept constant, e.g., as measured as a length, or, if appropriate, as measured as a time until reaching the displayed sector. This could be appropriate if for low speed movement of the viewer only a short distance has to be supervised while on higher speed a sector more far ahead should be subject of supervision.
   However, in a more simple scenario even one specific point on the track (e.g. a specific peril point) can be covered by a camera spot (i.e. a specific camera) and transferred to the driver while approaching to this location. According to such an embodiment, it is preferred that the time the surveillance video is provided is defined based on the speed approaching to the spot to allow action, especially such that the vehicle can be stopped before the supervised spot is reached. In such an embodiment, it is advantageously possible that the driver monitors the ongoing video stream from this camera (i.e. the specific camera) until the vehicle reaches this spot or a location in advance (such as a "point of no return" taking into account the breaking distance), after that the video jumps over to the surveillance of the next section or camera or point on the track or to the next specific point which needs specific attention (and the respective specific camera associated to that specific point). However, in this scenario the movie is depending on a specific point or on a plurality of specific points, while the idea of recognizing the location of the viewer and providing related content applies as well.
-- sampling videos in a continuous stream from different, quickly changing cameras:
   Each camera device (of the plurality of camera devices) delivers a video content (or a piece of image information converted to a partial video stream), and this video content (or partial video stream) is only needed for a comparatively short period of time depending on the movement of the viewer, e.g. the driver of a high speed train. To allow human beings to follow that video content (i.e. the succession of the video contents of the different camera devices, or the plurality of partial video streams), it has to made look like a continuous stream. For example, only some seconds of each video (or partial video stream) are taken and combined into one content stream (or enhanced video signal). Video processing takes places that way, that only a small fraction (or partial video stream) of each video stream (or stream of video signals of each camera device) are picked up and put into a sequence with other video fractions to produce an ongoing video (or enhanced video signal). The single video fractions are taken based on a logic which track part (in case of the vehicle being a train) - or which part along the probably line of movement of the vehicle - should follow based on the movement of the viewer, so that the next sequence fits to deliver an overall video in line with the expected evolution from the perspective of a viewer in the train or other vehicle. This is performed just in time to create the enhanced video signal as a "nearly live stream". However, purely adding raw pieces of image information obtained from the different camera devices (without appropriately converting such pieces of image information into partial video streams) might result in a forward-looking stream which allows a control of the track ahead, but will result in a more or less static combination of different images or videos which may look like a combination of pictures.
-- creation of the notion of movement based on content from static camera
   To achieve a sufficiently realistic impression of motion (of the viewer or user, i.e. the driver of the train or other vehicle) through the track parts (in case of the vehicle being a train) - or through a possible or probable path or movement, such as a street or motorway or the like - it is not sufficient to combine the static video material (i.e. the pieces of image information) per sector but to produce a notion of movement (by means of converting the pieces of image information into the partial video streams) similar to the viewing perspective while driving through a sector. From a viewer's perspective, this means that the viewer takes at the beginning the viewpoint seeing the entire sector (e.g. a part of a track portion ahead - i.e. at the second location - of the current position (first location) of the vehicle) while quickly moving to the end of the sector. Thereby, i.e. by converting each piece of image information into a corresponding partial video stream, a virtual movement of the camera device can be simulated although the camera device is fixed. Typically, only the perspective along the track has to be simulated (and not necessarily the total environment) has to be simulated with the existing video material. Given a good resolution of the plurality of camera devices - which is perfectly possible with currently available cameras - each single picture can be used for a specific processing (or conversion) to simulate a movement. According to one alternative embodiment of such a conversion process, a picture n is replicated into picture n+1; however, not the entire picture is used in n+1, but in line with a movement through the displayed track sector of this camera, the relevant image section is clipped out and enlarged to the full size. Which part of the picture is used for this conversion processing is predefined in line with the logical movement - so according to the changing perspective in a natural movement through the sector, the vanishing point of the resulting perspective after a small time is defined and taken as the midpoint of the next picture n+1. This does not necessarily be the midpoint of picture n+1 because depending of the natural perspective of the viewer or the expected/natural movement though the sector the perspective may be different from just increasing the midpoint of each picture. This image processing procedure is performed continuously until from one picture (i.e. a piece of image information) a movie (i.e. a partial video stream) is produced, typically having more than 25 pictures (or frames) per second). After this sequence (or partial video stream) is finished, the process is handed over to the next camera perspective, when the process starts again with the current taken from the ongoing video stream (i.e. the video signal) of that camera device. This process is suited for quickly changing camera perspectives with each camera perspective being the relevant camera perspective only for a comparatively short duration. Accordingly, the difference between the real development in the supervised sector (when entering this supervised sector), and the displayed situation, which is based - according to a preferred embodiment of the present invention -, e.g., on only one picture of the video stream (i.e. the video signals of a camera device) is very low.

According to the present invention, the plurality of camera devices is fixedly positioned for supervising or monitoring a plurality of locations - in case of the vehicle being a train, especially different track sections of the track of the train, i.e. the plurality of different locations correspond to different track sections of the track of the train. In this case (of the vehicle being a train), the part of the enhanced video signal that is provided to the driver of the vehicle at the first point in time (i.e. the vehicle being at the first location) corresponds to an image information associated to a second location of the plurality of locations such that the vehicle - at a second point in time subsequent to the first point in time -travels at the second location. In case that the vehicle is not a train (or not a track-led vehicle) the vehicle (i.e. the driver of the vehicle) might have different alternatives of continuing the movement at the first location, i.e. such a vehicle might not necessarily pass the second location (i.e. it might only be likely that the vehicle passes the second location).

According to the present invention it is preferred that a telecommunications network, especially a mobile communication network, is used
-- to provide the enhanced video signal to the driver of the vehicle, the vehicle comprising a user equipment connected to the telecommunications network and/or
-- to transmit at least part of the plurality of video signals from the camera devices to a network entity of the telecommunications network providing the selection of the plurality of pieces of image information from the plurality of streams of video signals and converting the plurality of pieces of image information into the plurality of partial video streams.

By the vehicle comprising a user equipment connected to the telecommunications network, it is advantageously possible to reduce efforts implementing the present invention, e.g. for providing the inventive anticipating virtual movement functionality to the driver or operator of a vehicle, especially a train, as the device (especially being permanently mounted in the vehicle or being a portable device and being temporarily brought on board the vehicle), receiving the enhanced video signal according to the present invention, can be provided as a user equipment of a mobile communication network. Likewise, alternatively or cumulatively, it is preferred that the plurality of camera devices (or at least part of the plurality of camera devices) constitute also user equipments of a mobile communication network. Thereby, it is advantageously possible to connect the camera devices wirelessly to the telecommunications network (a power supply could be provided by means of a renewable energy source such as solar power or wind power such that a connection to a fixed line power grid is not necessary, at least not for each and every fixedly installed camera device.

According to a further preferred embodiment of the present invention, the vehicle is a track-led vehicle, especially a train, wherein the track-led vehicle moves at the certain speed along a track, and wherein especially the first location corresponds to a location along the track which is upstream compared to the second location as well as to the plurality of locations.

According to a further embodiment of the present invention, it is also preferred that the distance between the first location and the second corresponds
-- to a predefined distance or a predefined distance range, or
-- to a predefined time of travel of the vehicle between the first location and the second location based on the current speed of the vehicle.

Thereby, it is advantageously possible according to the present invention that the anticipating virtual movement functionality according to the present invention can be provided in a flexible manner, i.e. adapted to the needs of the driver of the vehicle.

According to the present invention it is furthermore preferred that the plurality of streams of video signals, respectively, corresponds to video signals of fixedly positioned devices, each device having a constant perspective with respect to the respective location of the plurality of locations, and providing a video signal corresponding to the constant perspective.

According to the present invention, the step of converting the plurality of pieces of image information into a plurality of partial video streams comprises - based on one of the plurality of pieces of image information, and in view of generating one corresponding partial video stream of the plurality of partial video streams - performing a digital image processing functionality corresponding to creating a zooming-in effect (in particular together with creating a change of the perspective)
of the video signals generated by the plurality of camera devices such that enhanced video signal provides the impression of a continuous movement seen from the perspective of the driver of the vehicle.

It is thereby advantageously possible according to the present invention that a continuous video stream (or enhanced video signal) can be provided to the driver of the vehicle providing (while the vehicle is located (at the first point in time) at the first location) the impression of the perspective of a virtual movement device being positioned at the second location (especially along the track of the vehicle).

Furthermore, the present invention relates to a system according to claim 6.

Thereby, it is advantageously possible to provide a system that provides the advantages of the inventive method.

According to the present invention - and especially with respect to the inventive system -, it is preferred that the system comprises a telecommunications network, especially a mobile communication network, wherein the telecommunications network is used
-- to provide the enhanced video signal to the driver of the vehicle, the vehicle comprising a user equipment connected to the telecommunications network and/or
-- to transmit at least part of the plurality of video signals from the camera devices to a network entity of the telecommunications network providing the selection of the plurality of pieces of image information from the plurality of streams of video signals and converting the plurality of pieces of image information into the plurality of partial video streams.

Additionally, according to the present invention - and especially with respect to the inventive system -, it is preferred that the vehicle is a track-led vehicle, especially a train, wherein the track-led vehicle moves at the certain speed along a track, and wherein especially the first location corresponds to a location along the track which is upstream compared to the second location as well as to the plurality of locations.

Additionally, the present invention relates to a program comprising a computer readable program code which, when executed on a computer moved with the vehicle or on a network entity of the telecommunications network providing the selection of the plurality of pieces of image information from the plurality of streams of video signals and converting the plurality of pieces of image information into the plurality of partial video streams, or in part on the computer moved with the vehicle and in part on the network entity of the telecommunications network providing the selection of the plurality of pieces of image information from the plurality of streams of video signals and converting the plurality of pieces of image information into the plurality of partial video streams, causes the computer or the network entity of the telecommunications network to perform the inventive method.

Still additionally, the present invention relates to a computer program product for generating an enhanced video signal and providing the enhanced video signal to the driver of a vehicle that is moving at a certain speed, the computer program product comprising a computer program stored on a storage medium, the computer program comprising program code which, when executed on a computer moved with the vehicle or on a network entity of the telecommunications network providing the selection of the plurality of pieces of image information from the plurality of streams of video signals and converting the plurality of pieces of image information into the plurality of partial video streams, or in part on the computer moved with the vehicle and in part on the network entity of the telecommunications network providing the selection of the plurality of pieces of image information from the plurality of streams of video signals and converting the plurality of pieces of image information into the plurality of partial video streams, causes the computer or the network entity of the telecommunications network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

**Figure 1** schematically illustrates the inventive method and the inventive system, exemplarily showing a vehicle moving along a plurality of track sections of a track, the plurality of track sections being equipped with camera devices, providing the possibility to anticipate an obstacle at the track.
**Figure 2** schematically illustrates a plurality of track sections of a track, the plurality of track sections being equipped with camera devices.
**Figure 3** schematically illustrates the inventive method of generating an enhanced video signal from a plurality of video streams generated by the plurality of camera devices.
**Figure 4** schematically illustrates a mobile communication network comprising a multitude of radio cells being served by a multitude of base station entities, and a user equipment being served by the mobile communication network.
**Figure 5** schematically illustrates an exemplary situation of converting images or frames of a piece of image information into images or frames of a partial video stream.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

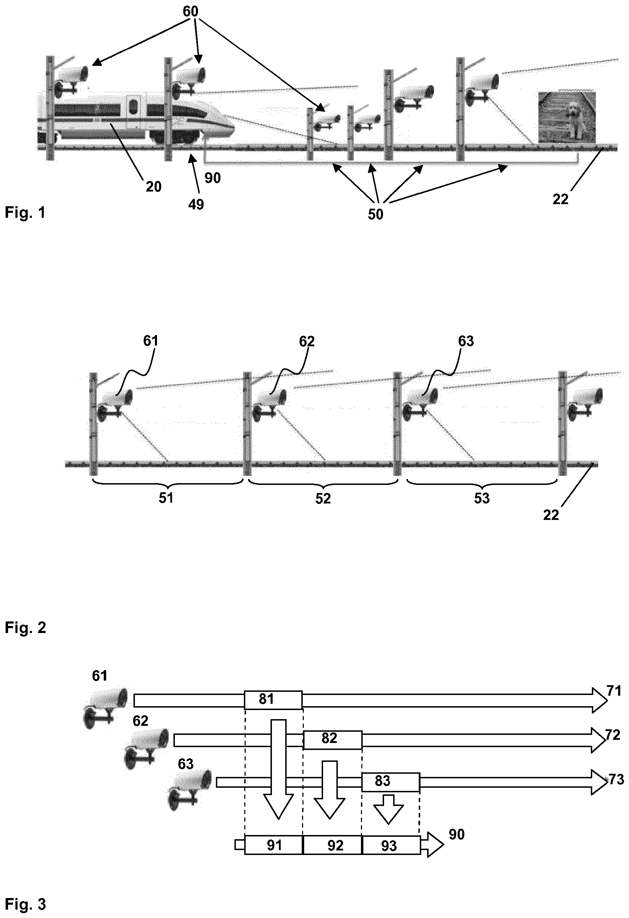

In Figure 1, the inventive method and the inventive system is exemplarily represented by means of a vehicle 20 moving along a plurality of track sections 50 (or plurality of locations 50) of a track 22, the plurality of track sections 50 (or the plurality of locations 50) being equipped with camera devices 60, providing the possibility to anticipate an obstacle (as exemplarily shown in the right hand part of Figure 1) at (or on) the track 22. The anticipation functionality is realized, according to the present invention, by means of providing the driver of the vehicle 20 an enhanced video signal 90, comprising partial video streams related to track sections 50 that the driver of the vehicle 20 is unable to visually check while the vehicle being located at a first location 49.

In Figure 2, a plurality of track sections of a track 22 are shown in greater detail. The plurality of track sections 50 or the plurality of locations 50 (cf. Figure 1) comprise at least a location 51 (or first track section 51), a location 52 (or second track section 52), and a location 53 (or third track section 53). The plurality of camera devices 60 (cf. Figure 1) comprise at least a first camera device 61, a second camera device 62, and a third camera device 63. Each camera device 61, 62, 63 are fixedly positioned at or related to the plurality of locations 51, 52, 53 (or track sections), i.e. having a field of view such that at least one of the plurality of locations 51, 52, 53 (or track sections) is at least partly part of the field of view of one of the camera devices 61, 62, 63. From Figure 2, it can be seen, that the first camera device 61 is fixedly positioned at or related to the location 51 (or first track section 51), the second camera device 62 is fixedly positioned at or related to the location 52 (or second track section 52), the third camera device 63 is fixedly positioned at or related to the location 53 (or third track section 53).

According to the present invention, the enhanced video signal 90 is generated such that when the enhanced video signal 90 is shown to the driver or operator of the vehicle 20, the driver or operator of the vehicle 20 is able to view ahead of the current location of the vehicle 20 at a given point in time, i.e. at a predetermined first point in time, the vehicle 20 might be located at the first location 49. In such a situation, the driver of the vehicle might be able to visually overlook a certain distance ahead of the vehicle 20. In order to provide additional information to the driver of the vehicle 20, it is proposed according to the present invention that the enhanced video signal 90 - at the first point in time (i.e. while the vehicle 20 moving at a certain speed but being located at the first location) - comprises image information of a second location. If it is assumed that the plurality of locations 51, 52, 53 is located outside of the visually observable field of view of the driver of the vehicle 20 (when the vehicle 20 is located at the first location 49), then the provision of image information generated by the plurality of camera devices 61, 62, 63 is able to enhance the possibility of the driver to anticipate events or necessary actions (such as, e.g., breaking actions). According to the present invention, parts of the typically continuously generated video streams 71, 72, 73 of the camera devices 61, 62, 63 are selected as pieces of image information 81, 82, 83, and the pieces of image information 81, 82, 83 are converted into a plurality of partial video streams 91, 92, 93 that are part of the enhanced video signal first piece of image information 81 is selected from the first video stream 71 and converted to the first partial video stream, the. This is schematically represented in Figure 3, that illustrates the inventive method of generating the enhanced video signal 90 from a plurality of video streams 71, 72, 73 generated by the plurality of camera devices 61, 62, 63: The first piece of image information 81 is selected from the first video stream 71 and converted to the first partial video stream 91, the second piece of image information 82 is selected from the second video stream 72 and converted to the second partial video stream 92, the third piece of image information 83 is selected from the third video stream 73 and converted to the third partial video stream 93.

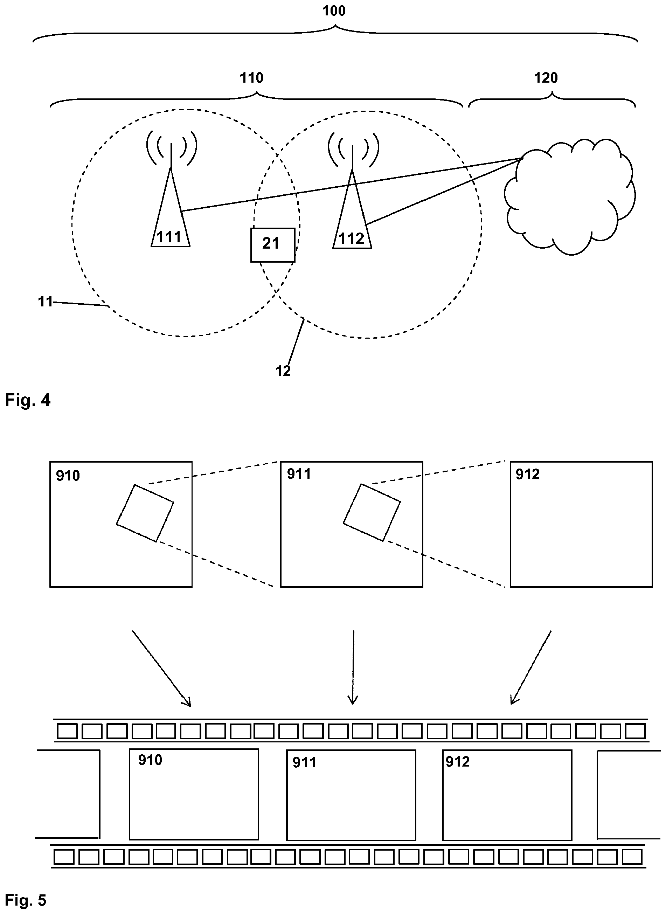

In Figure 4, a mobile communication network 100 comprising a multitude of radio cells 11, 12 being served by a multitude of base station entities 111, 112, and a user equipment 21 being served by the mobile communication network 100 is schematically shown. In the example, the mobile communication network comprises an access network 110 and a core network 120. The mobile communication network is preferably a cellular telecommunications network comprising typically a plurality of network cells, wherein two radio cells are represented in Figure 1 by means of reference signs 11 and 12: a first radio cell 11, and a second radio cell 12. The access network 110 comprises at least a first base station entity 111 serving the first radio cell 11, and a second base station entity 112, serving the second radio cell 12. The mobile communication network 100 is an example of a telecommunications network 100, preferably used in connection with the inventive method and the inventive system.

In Figure 5, an exemplary situation of converting images (or frames) 910, 911, 912 of a piece of image information into images or frames of a partial video stream. In the example, three different images or frames 910, 911, 912 are considered. In the example shown, the second image or frame 911 (e.g. of the first partial video stream 91) is obtained by an image processing operation conducted on the basis of the first image or frame 910 (of or directly taken from, e.g., the first piece of image information 81), the image processing operation comprising enlarging a part of the first image or frame 910, and rotating the enlarged part of the first image or frame 910. Likewise, the subsequent third image or frame 912 is obtained by an image processing operation conducted on the basis of the second image or frame 911, the image processing operation comprising enlarging a part of the second image or frame 911, and rotating the enlarged part of the second image or frame 911.

According to the present invention it is advantageously possible to enable video supervision for providing an anticipating functionality for the driver of a vehicle 20 such that the video (or the enhanced video signal) displays a stream of pictures in line with the human capability to recognize pictures and/or to follow those in form of an ongoing video or movie. Very quickly changing camera angles or views from different cameras are not suited for humans - especially to be continuously or quasi-continuously monitored - since either the quickly changing perspectives can't be followed or at least will tire the viewing person very quickly. According to the present invention, it is, thus, proposed to generate a continuous video signal and to present it to the driver of the vehicle 20 with continuous action, and as much as possible without jumping from one perspective to another. According to the present invention, an alternative to continuously moving a camera is provided by using existing videos, especially for quickly moving vehicles 20, to present the operator (or driver) of the vehicle 20 a video perspective beyond any camera perspective that would be possible from a camera device being directly installed in the vehicle 20. This allows new perspectives and effects based on already installed cameras.

According to the present invention, the inventive method and system provides an enhanced possibility for video supervision of moving objects in line with capabilities of human beings to monitor the resulting video. This could be applied in control and monitoring functions, for surveillance purpose as well as for movie creation and entertainment purposes.

According to the present invention, a more sophisticated video transmission is proposed, e.g. (for a track-led vehicle 20) displaying the track 22 ahead and especially being related to a situation where the vehicle 20 moves at a velocity which exceeds human reaction time and/or by the nature of the vehicle 20 the normal visibility of the driver/controller is not sufficient to avoid incidents if something unexpected happens on the track 22 ahead. Given a complete camera surveillance of the track 22 by a plurality of video cameras (or camera devices 60), e.g. mounted on each post of the electric power supply, this video material can be used to provide a just-in-time video stream of the track 22. To allow a control of the track 22 ahead for each train or other vehicle 20, the video material of the sector of the track ahead in the direction of movement of the train or other vehicle 20 has to be provided to the driver of the vehicle 20 or operator. Since the cameras 60 are static (fixedly mounted) while the train or other vehicle 20 moves quickly, the video generated by each camera (device) has to be provided just in the moment the train or other vehicle 20 reaches a predefined distance from the respective sector of the track 22 (or location 50), i.e. pieces of image information 81, 82, 83 have to be selected correspondingly from the streams of video signals 71, 72, 73 generated by the camera devices 61, 62, 63. While the vehicle 20 moves from one sector to the next, the camera for the next sector (or the next sectors or locations) comes into play to provide the forward looking stream. This process is repeated in accordance with the movement of the vehicle 20.

Just providing the pieces of image information 81, 82, 83 generated by the camera devices 61, 62, 63 in a sequence of different video streams is normally unusable for humans. Therefore, the incoming video from different cameras (i.e. the pieces of image information 81, 82, 83) is processed into an ongoing video signal (i.e. the enhanced video signal 90 made of the partial video streams 91, 92, 93) similar to a video stream provided by a single camera but moving at a predefined distance ahead of the train or other vehicle 20. This allows the driver or operator of the train or other vehicle 20 to see - typically beyond his or her normal visibility - the track 22 ahead based on such an ongoing, continuous video transmission of the enhanced video signal 90.

According to the present invention, video cameras (or camera devices) 61, 62, 63 are mounted close to and/or alongside to the track 22 (or road or other movement path of the vehicle 20) supervising a specific sector (or location) thereof. At the end of any sector (or location) of the track 22, the next camera takes over and displays the next sector (or location) of the track. Accordingly, the entire range of the track 22 is covered by video surveillance, while each part of the track 22 is shown on a dedicated camera. Starting from the location of the viewer of the generated video (i.e. the location of the vehicle 20), to fulfill the needs of this viewer, the framework is defined: Depending on the direction of movement, the speed and additional information about the functions to be fulfilled (e. g. breaking control, distance to object to come to a stop), the sequence of videos from the track 22 is determined. This can be either a fixed distance (e.g. "always 800 m ahead of the vehicle") or more flexible a variable distance, but based on a fixed time (e.g. "distance covered in 30 seconds based on the current speed"). The location of the viewer can be tracked by GPS or generated from the mobile network (mobile communication network) or simply an odometer of the vehicle 20. This information is used to select the camera of the appropriate sector (or location). To show the perspective currently out of direct line of sight but relevant for initiating, e.g., a breaking action, the respective camera perspective is selected which shows the track at the right distance ahead of the vehicle 20. To display the relevant perspective in line with the movement of the viewer, the perspective jumps from one camera supervised sector (or location) to the next parallel to the user's (and the vehicle's) movement through the sectors or along the track 22. In consequence, the distance between the location of the viewer (first location) and the displayed sector / the forward looking perspective (second location) can be appropriately chosen, e.g. it could be kept constant either in terms of distance or in terms of time reaching the defined area. A basic rule for setting the chosen distance between the first and second location could be the distance which still allows to stop the train or other vehicle 20 but not too much ahead to reduce likelihood of changes during the time the train or other vehicle 20 reaches the just spotted sector of the track.

Based on the principle according to the present invention, each camera delivers a video content which is only needed for a short period of time depending on the movement of the train or other vehicle 20. To allow human beings to follow that video content, the pieces of image information 81, 82, 83 are converted such that together the partial video streams 91, 92, 93, and, hence, the resulting enhanced video stream 90 is made to look like one continuous stream (i.e. providing the impression of a constant movement of the virtual movement). Typically, only one second or some seconds of each video (or partial video stream 91, 92, 93) is taken and combined to in one content stream 90. Video processing takes places in a way that only small fractions of each stream of video signals 71, 72, 73 (i.e. video streams generated by the camera devices 61, 62, 63) are picked up (i.e. selected) and put into a sequence with other video fractions to produce an ongoing video 90. The single video fractions are taken based on a logic which part should follow based on the movement of the viewer, so that the next sequence fits to deliver an overall video in line with the expected progress from a viewer's perspective. This is performed just-in-time to create a "nearly live stream".

Due to converting the plurality of pieces of image information 81, 82, 83 into a plurality of partial video streams 91, 92, 93, it can advantageously be avoided that this process of assembling the pieces of image information 81, 82, 83 results in a more or less static combination of different videos which may look like a combination of pictures. According to the present invention and since the cameras devices 60 are static, the video angle (of the pieces of image information 81, 82, 83) normally does not change. Hence, the pieces of image information 81, 82, 83 provide an overview of the track sector but no movement alongside the track (similar to a movement by the train and the corresponding view of the driver). Therefore, it is proposed to combine video streams and to provide a hand over / follow up procedure in line with the movement of the train through the sectors of the track. This has to be adapted to the speed of the train (or other vehicle 20) to show just in time the sector of the track 22 in line with, e.g. the needed braking distance; in other words: the faster the train (or other vehicle 22) the larger the distance between the first location and the second location has to be.

To produce the impression of movement although the cameras are fixed, it is proposed to provide for an image processing such that the impression of such a movement is created artificially within the considered sector of the track 22 (or at that location). From a viewer's perspective this means, that the viewer takes (typically at the beginning of each of the partial video streams 91, 92, 93) the viewpoint seeing the entire sector while quickly moving to the end. This effect is realized by a producing a zooming-in effect despite the fact that the camera is fixed. Since only the perspective along the track is relevant (and not the total environment), it is proposed to simulate this perspective (of the track 22) with the existing video material.

To realize the zooming-in effect (i.e. the notion of a movement through a considered sector of the track 22), the following process is possible, which is not in accordance with the invention but is provided for the purpose of comparison:
A(n optical) zoom-in function:
Zooming from a general perspective to a specific point simulates to the viewer the impression of moving towards the vanishing point of the zoom. In case the video of the camera device is requested, the zoom function is activated and the entire video sequence is transmitted while the zoom is performed over this time. To display the movement in the correct speed, in principle two procedures can be applied:
a) The zoom factor is calculated from the track position of the vehicle. Based on this position, the corresponding forward looking position of the sector ahead is defined, while an update follows in each single moment; this information is used to display the forward looking perspective. Since the distance should be constant either in terms of the time (the vehicle 20 needs to arrive at the second location) or in terms of distance, it can be determined which part of the sector should be displayed. For this position the right zoomed perspective from the latest video camera shot is taken.
   With this procedure even changing speed can be taken in account, however, a continuous location update has to be forwarded to the camera as well as the calculation for the correct perspective provided.
b) According to an alternative process, being more simple (and without transferring a location update to produce the correct perspective), the average speed of the vehicle 20 can be taken as well. To do this, a calculation is performed beforehand how long, on overage, a sector of the track 22 is displayed to the viewer until the video stream of the next sector is requested. This defines the time of the zoom-in operation from starting in the overarching perspective until reaching the predefined vanishing point with full zoom. For example: In case that the average speed corresponds to passing a sector in 5 seconds, the zoom operation from the overarching place until close view on the vanishing point is performed in 5 seconds. However and as already mentioned, second alternative method is not correctly applicable to changing speeds of the vehicle 20.

Generally, using a(n optical) zoom has the advantage that the entire video sequence (i.e. the plurality of pieces of image information 81, 82, 83) can be used without further processing the single pictures of the video. However, this works only for linear movement and does not cover effects like the movement in a curve.

According to the invention, the following process is used to realize the zooming-in effect:

### Zooming-in by means of image processing

Since video is a combination of single pictures in sequence such fast, that the human eye recognizes such a sequence as a continuous movement, this effect can be used in this context to produce the notion of movement in the displayed sector. Given a good resolution - which is no issue with currently available camera devices - each single picture can be used for a specific processing to simulate a movement. For this purpose the picture n is replicated into picture n+1. However, not the entire picture is used for picture n+1, but in line with a movement through the displayed sector of this camera only the appropriate section of the image is clipped out and enlarged to the full size (cf. Figure 5). Which part of the picture is used for this is predefined in line with the logical movement, so according to the changing perspective in a natural movement through the sector the vanishing point of the resulting perspective after a small time is defined and taken as the midpoint of the next picture (picture or frame n+1). This does not have to be the center of picture n+1 because, depending of the natural perspective of the viewer or the expected/natural movement though the sector, the perspective may be different from just increasing the center of each picture.

This procedure is applied continuously until from one picture a movie is produced (> 25 picture per second). After this sequence is finished the process is handed over to the next camera perspective, when the process starts again with the up-to-date picture taken from the ongoing video stream of that camera.

This process is suited for quickly changing camera perspectives while each camera perspective is used only for a very short duration. Accordingly, the difference between the real development in the supervised sector and the displayed situation, which is based on only one picture form the video stream when entering this supervised sectors is very small.

According to an alternative embodiment of the present invention (alternatively to a process where the first picture of the camera is used to do the processing for the movement through the section, and all the following pictures of the sequence building on the same point of time while new developments happening on the supervised track are not captured during this produced sequence, leading to the possible consequence that, although this might be only a (very) short range of time, it is not absolutely precise to capture ongoing developments in this section), it is advantageously possible and preferred that (since the camera produces an ongoing movie from the track section) not only the first but all following pictures are used as well; accordingly, it is advantageously possible that the development over time (seen by the considered camera) can be captured. To handle this, the speed for moving through the track is defined by the approaching train. As before, this defines the number of pictures needed to produce the video and the processing with the simulated zooming as described above. However, not only the first picture is used to produce the next picture with cuttings from this picture to simulate the movement, but as soon as a new picture is available from the camera (this happens at least every 40 ms while producing 25 pictures per second) this is taken and applied to produce the next picture for the resulting movie clip. For doing this, the movement through the section has to be taken into account which means, although a new, more recent picture is taken, the clipping builds on the simulated position which has been already reached in the section by producing the clipping. While using the approach, the resulting movie becomes even more accurate in displaying any action in the supervised section.

According to a preferred embodiment of the present invention, especially of the inventive system according to the present invention, the entire process is performed by a platform which monitors the movement of the vehicles that are the recipients of the videos (i.e. the enhanced video signals) produced and which is connected to all cameras with access to the videos. The tracking data of the vehicles are forwarded to the platform. Based on a predefined logic keeping in mind relevant aspects (like speed, breaking distance, changes of track conditions, etc.) the platform calculates which part of the track should be displayed to the driver. Accordingly, the relevant video sequences are chosen. As long as movement of the vehicle receiving the enhanced video signal 90 is tracked, the previously described procedures are performed by this platform. In case, the vehicle becomes very slow or stops, even the normal video of one camera can be displayed. According to a preferred embodiment of the present invention, the enhanced video signal 90 is forwarded to the driver of the moving vehicle 20 by means of a mobile communication network such as a cellular mobile network. Based on coverage and available bandwidth, this can be done by means of a 4G, 3G or even 2G network, since for the basic information even a low resolution video should be sufficient to identify any relevant changes on the track.

A just-in-time forwarding to the driver seems to be more appropriate than a display in a central control center since the number of videos of all tracked sectors exceeds a real supervision opportunity in a central control point, furthermore only when passing the track this information is relevant. This means as well, that in case of no traffic the cameras could even be shut off to save energy and being activated when traffic on that track is expected.

## Claims

1. Method for generating an enhanced video signal (90) and providing the enhanced video signal (90) to the driver of a vehicle (20) that is moving at a certain speed, wherein, at a predetermined first point in time, the vehicle (20) is located at a predetermined first location (49), wherein the enhanced video signal (90) comprises a plurality of pieces of image information (81, 82, 83) associated to a plurality of locations (51, 52, 53), wherein each one of the plurality of pieces of image information (81, 82, 83) relates to one of the plurality of locations (51, 52, 53), wherein the part of the enhanced video signal (90) that is provided to the driver of the vehicle (20) at the first point in time corresponds to an image information associated to a second location of the plurality of locations (51, 52, 53) such that the vehicle (20) - at a second point in time subsequent to the first point in time - either travels at the second location or is likely to travel at the second location,
wherein the pieces of image information (81, 82, 83) are part of a plurality of streams of video signals (71, 72, 73) generated by a plurality of camera devices (61, 62, 63) that are fixedly positioned at or related to the plurality of locations (51, 52, 53), wherein each one of the plurality of pieces of image information (81, 82, 83) corresponds to one of the plurality of streams of video signals (71, 72, 73) generated by one of the plurality of camera devices (61, 62, 63) having a field of view such that at least one of the plurality of locations (51, 52, 53) is at least partly part of the field of view of the respective camera device (61, 62, 63), wherein the method comprises the steps of:
-- in a first step, the plurality of pieces of image information (81, 82, 83) is selected from the plurality of streams of video signals (71, 72, 73),
-- in a second step, subsequent to the first step, the plurality of pieces of image information (81, 82, 83) is converted into a plurality of partial video streams (91, 92, 93),
-- in a third step, the plurality of partial video streams (91, 92, 93) is combined to be integrated in the enhanced video signal (90),
wherein the step of converting the plurality of pieces of image information (81, 82, 83) into a plurality of partial video streams (91, 92, 93) comprises - based on one of the plurality of pieces of image information (81, 82, 83), and in view of generating one corresponding partial video stream of the plurality of partial video streams (91, 92, 93) - performing a digital image processing functionality corresponding to creating a zooming-in effect of the video signals generated by the plurality of camera devices (61, 62, 63) such that the enhanced video signal (90) provides the impression of a continuous movement seen from the perspective of the driver of the vehicle (20).

2. Method according to claim 1, wherein a telecommunications network (100), especially a mobile communication network, is used
-- to provide the enhanced video signal (90) to the driver of the vehicle (20), the vehicle (20) comprising a user equipment (21) connected to the telecommunications network (100) and/or
-- to transmit at least part of the plurality of video signals (71, 72, 73) from the camera devices (61, 62, 63) to a network entity of the telecommunications network (100) providing the selection of the plurality of pieces of image information (81, 82, 83) from the plurality of streams of video signals (71, 72, 73) and converting the plurality of pieces of image information (81, 82, 83) into the plurality of partial video streams (91, 92, 93).

3. Method according to one of the preceding claims, wherein the vehicle is a track-led vehicle, especially a train, wherein the track-led vehicle (20) moves at the certain speed along a track (22), and wherein especially the first location (49) corresponds to a location along the track which is upstream compared to the second location as well as to the plurality of locations (51, 52, 53).

4. Method according to one of the preceding claims, wherein the distance between the first location (49) and the second corresponds
-- to a predefined distance or a predefined distance range, or
-- to a predefined time of travel of the vehicle (20) between the first location (49) and the second location based on the current speed of the vehicle (20).

5. Method according to one of the preceding claims, wherein the plurality of streams of video signals (71, 72, 73), respectively, corresponds to video signals of fixedly positioned devices, each device having a constant perspective with respect to the respective location of the plurality of locations (51, 52, 53), and providing a video signal corresponding to the constant perspective.

6. System for generating an enhanced video signal (90) and providing the enhanced video signal (90) to the driver of a vehicle (20) that is moving at a certain speed, wherein the system comprises the vehicle (20) and a plurality of camera devices (61, 62, 63), wherein the enhanced video signal (90) comprises a plurality of pieces of image information (81, 82, 83) associated to a plurality of locations (51, 52, 53), wherein each one of the plurality of pieces of image information (81, 82, 83) relates to one of the plurality of locations (51, 52, 53), wherein the pieces of image information (81, 82, 83) are part of a plurality of streams of video signals (71, 72, 73) generated by the plurality of camera devices (61, 62, 63) that are fixedly positioned at or related to the plurality of locations (51, 52, 53), wherein each one of the plurality of pieces of image information (81, 82, 83) corresponds to one of the plurality of streams of video signals (71, 72, 73), the plurality of camera devices (61, 62, 63) having a field of view such that at least one of the plurality of locations (51, 52, 53) is at least partly part of the field of view of the respective camera device (61, 62, 63), wherein the system is configured such that, while the vehicle (20) being located - at a predetermined first point in time - at a predetermined first location (49):
-- the part of the enhanced video signal (90) that is provided to the driver of the vehicle (20) at the first point in time corresponds to an image information associated to a second location of the plurality of locations (51, 52, 53) such that the vehicle (20) - at a second point in time subsequent to the first point in time - either travels at the second location or is likely to travel at the second location,
-- the plurality of pieces of image information (81, 82, 83) being selected from the plurality of streams of video signals (71, 72, 73), and
-- the plurality of pieces of image information (81, 82, 83) being converted into a plurality of partial video streams (91, 92, 93),
-- the plurality of partial video streams (91, 92, 93) being combined to be integrated in the enhanced video signal (90),
wherein converting the plurality of pieces of image information (81, 82, 83) into a plurality of partial video streams (91, 92, 93) comprises - based on one of the plurality of pieces of image information (81, 82, 83), and in view of generating one corresponding partial video stream of the plurality of partial video streams (91, 92, 93) - performing a digital image processing functionality corresponding to creating a zooming-in effect of the video signals generated by the plurality of camera devices (61, 62, 63) such that the enhanced video signal (90) provides the impression of a continuous movement seen from the perspective of the driver of the vehicle (20).

7. System according to claim 6, wherein the system comprises a telecommunications network (100), especially a mobile communication network, wherein the telecommunications network (100) is used
-- to provide the enhanced video signal (90) to the driver of the vehicle (20), the vehicle (20) comprising a user equipment (21) connected to the telecommunications network (100) and/or
-- to transmit at least part of the plurality of video signals (71, 72, 73) from the camera devices (61, 62, 63) to a network entity of the telecommunications network (100) providing the selection of the plurality of pieces of image information (81, 82, 83) from the plurality of streams of video signals (71, 72, 73) and converting the plurality of pieces of image information (81, 82, 83) into the plurality of partial video streams (91, 92, 93).

8. System according to of claims 6 or 7, wherein the vehicle (20) is a track-led vehicle, especially a train, wherein the track-led vehicle (20) moves at the certain speed along a track (22), and wherein especially the first location (49) corresponds to a location along the track which is upstream compared to the second location as well as to the plurality of locations (51, 52, 53).

9. Program comprising a computer readable program code which, when executed on a computer moved with the vehicle (20) or on a network entity of the telecommunications network (100) providing the selection of the plurality of pieces of image information (81, 82, 83) from the plurality of streams of video signals (71, 72, 73) and converting the plurality of pieces of image information (81, 82, 83) into the plurality of partial video streams (91, 92, 93), or in part on the computer moved with the vehicle (20) and in part on the network entity of the telecommunications network (100) providing the selection of the plurality of pieces of image information (81, 82, 83) from the plurality of streams of video signals (71, 72, 73) and converting the plurality of pieces of image information (81, 82, 83) into the plurality of partial video streams (91, 92, 93), causes the computer or the network entity of the telecommunications network (100) to perform a method according one of claims 1 to 5.

10. Computer-readable medium for generating an enhanced video signal (90) and providing the enhanced video signal (90) to the driver of a vehicle (20) that is moving at a certain speed, the computer program product comprising a computer program stored on a storage medium, the computer-readable medium comprising program code which, when executed on a computer moved with the vehicle (20) or on a network entity of the telecommunications network (100) providing the selection of the plurality of pieces of image information (81, 82, 83) from the plurality of streams of video signals (71, 72, 73) and converting the plurality of pieces of image information (81, 82, 83) into the plurality of partial video streams (91, 92, 93), or in part on the computer moved with the vehicle (20) and in part on the network entity of the telecommunications network (100) providing the selection of the plurality of pieces of image information (81, 82, 83) from the plurality of streams of video signals (71, 72, 73) and converting the plurality of pieces of image information (81, 82, 83) into the plurality of partial video streams (91, 92, 93), causes the computer or the network entity of the telecommunications network (100) to perform a method according one of claims 1 to 5.

## Patentansprüche

1. Verfahren zum Generieren eines verbesserten Videosignals (90) und zum Bereitstellen des verbesserten Videosignals (90) für den Fahrer eines Fahrzeugs (20), das sich mit einer gewissen Geschwindigkeit bewegt, wobei sich das Fahrzeug (20) an einem zuvor festgelegten ersten Zeitpunkt an einem zuvor festgelegten ersten Ort (49) befindet, wobei das verbesserte Videosignal (90) mehrere Bildinformationen (81, 82, 83) umfasst, die mehreren Orten (51, 52, 53) zugeordnet sind, wobei sich jede der mehreren Bildinformationen (81, 82, 83) auf einen der mehreren Orte (51, 52, 53) bezieht, wobei der Teil des verbesserten Videosignals (90), der dem Fahrer des Fahrzeugs (20) an dem ersten Zeitpunkt bereitgestellt wird, einer Bildinformation entspricht, die einem zweiten Ort der mehreren Orte (51, 52, 53) zugeordnet ist, dergestalt, dass das Fahrzeug (20)
- an einem zweiten Zeitpunkt nach dem ersten Zeitpunkt - entweder an dem zweiten Ort fährt oder wahrscheinlich an dem zweiten Ort fahren wird,
wobei die Bildinformationen (81, 82, 83) Teil mehrerer Ströme von Videosignalen (71, 72, 73) sind, die durch mehrere Kameravorrichtungen (61, 62, 63) generiert werden, die fest an den mehreren Orten (51, 52, 53) positioniert sind oder sich auf diese beziehen, wobei jede der mehreren Bildinformationen (81, 82, 83) einem der mehreren Ströme von Videosignalen (71, 72, 73) entspricht, die durch eine der mehreren Kameravorrichtungen (61, 62, 63) generiert werden, die ein solches Sichtfeld haben, dass mindestens einer der mehreren Orte (51, 52, 53) mindestens teilweise Teil des Sichtfeldes der jeweiligen Kameravorrichtung (61, 62, 63) ist, wobei das Verfahren die folgenden Schritte umfasst:
- in einem ersten Schritt werden die mehreren Bildinformationen (81, 82, 83) aus den mehreren Strömen von Videosignalen (71, 72, 73) ausgewählt,
- in einem zweiten Schritt, im Anschluss an den ersten Schritt, werden die mehreren Bildinformationen (81, 82, 83) in mehrere Teil-Videoströme (91, 92, 93) umgewandelt,
- in einem dritten Schritt werden die mehreren Teil-Videoströme (91, 92, 93) kombiniert, um in das verbesserte Videosignal (90) integriert zu werden,
wobei der Schritt des Umwandelns der mehreren Bildinformationen (81, 82, 83) in mehrere Teil-Videoströme (91, 92, 93) umfasst, auf der Grundlage einer der mehreren Bildinformationen (81, 82, 83) und im Hinblick auf das Generieren eines einzelnen entsprechenden Teil-Videostroms der mehreren Teil-Videoströme (91, 92, 93) eine digitale Bildverarbeitungsfunktionalität durchzuführen, die dem Generieren eines Heranzoom-Effekts der durch die mehreren Kameravorrichtungen (61, 62, 63) generierten Videosignale entspricht, dergestalt, dass das verbesserte Videosignal (90) den Eindruck einer kontinuierlichen Bewegung, aus der Perspektive des Fahrers des Fahrzeugs (20) gesehen, vermittelt.

2. Verfahren nach Anspruch 1, wobei ein Telekommunikationsnetz (100), insbesondere ein Mobilfunknetz, verwendet wird:
- um dem Fahrer des Fahrzeugs (20) das verbesserte Videosignal (90) bereitzustellen, wobei das Fahrzeug (20) eine mit dem Telekommunikationsnetz (100) verbundene Benutzerausrüstung (21) umfasst, und/oder
- um mindestens einen Teil der mehreren Videosignale (71, 72, 73) von den Kameravorrichtungen (61, 62, 63) an eine Netzentität des Telekommunikationsnetzes (100) zu senden, die die Auswahl der mehreren Bildinformationen (81, 82, 83) aus den mehreren Strömen von Videosignalen (71, 72, 73) bereitstellt und die mehreren Bildinformationen (81, 82, 83) in die mehreren Teil-Videoströme (91, 92, 93) umwandelt.

3. Verfahren nach einem der vorangehenden Ansprüche, wobei das Fahrzeug ein spurgeführtes Fahrzeug, insbesondere ein Zug, ist, wobei sich das spurgeführte Fahrzeug (20) mit der gewissen Geschwindigkeit entlang einer Spur (22) bewegt, und wobei insbesondere der erste Ort (49) einem Ort entlang der Spur entspricht, der im Vergleich zu dem zweiten Ort sowie zu den mehreren Orten (51, 52, 53) spuraufwärts liegt.

4. Verfahren nach einem der vorangehenden Ansprüche, wobei die Entfernung zwischen dem ersten Ort (49) und dem zweiten Ort (49)
- einer zuvor festgelegten Entfernung oder einem zuvor festgelegten Entfernungsbereich entspricht oder
- einer zuvor festgelegten Fahrzeit des Fahrzeugs (20) zwischen dem ersten Ort (49) und dem zweiten Ort auf der Grundlage der momentanen Geschwindigkeit des Fahrzeugs (20) entspricht.

5. Verfahren nach einem der vorangehenden Ansprüche, wobei die mehreren Ströme von Videosignalen (71, 72, 73) jeweils Videosignalen von fest positionierten Vorrichtungen entsprechen, wobei jede Vorrichtung eine konstante Perspektive in Bezug auf den jeweiligen Ort der mehreren Orte (51, 52, 53) hat und ein Videosignal entsprechend der konstanten Perspektive bereitstellt.

6. System zum Generieren eines verbesserten Videosignals (90) und zum Bereitstellen des verbesserten Videosignals (90) für den Fahrer eines Fahrzeugs (20), das sich mit einer gewissen Geschwindigkeit bewegt, wobei das System das Fahrzeug (20) und mehrere Kameravorrichtungen (61, 62, 63) umfasst, wobei das verbesserte Videosignal (90) mehrere Bildinformationen (81, 82, 83) umfasst, die mehreren Orten (51, 52, 53) zugeordnet sind, wobei sich jede der mehreren Bildinformationen (81, 82, 83) auf einen der mehreren Orte (51, 52, 53) bezieht, wobei die Bildinformationen (81, 82, 83) Teil mehrerer Ströme von Videosignalen (71, 72, 73) sind, die durch die mehreren Kameravorrichtungen (61, 62, 63) generiert werden, die fest an den mehreren Orten (51, 52, 53) positioniert sind oder sich auf diese beziehen, wobei jede der mehreren Bildinformationen (81, 82, 83) einem der mehreren Ströme von Videosignalen (71, 72, 73) entspricht, wobei die mehreren Kameravorrichtungen (61, 62, 63) ein solches Sichtfeld aufweisen, dass mindestens einer der mehreren Orte (51, 52, 53) mindestens teilweise Teil des Sichtfeldes der jeweiligen Kameravorrichtung (61, 62, 63) ist, wobei das System so konfiguriert ist, dass, während sich das Fahrzeug (20) - an einem zuvor festgelegten ersten Zeitpunkt - an einem zuvor festgelegten ersten Ort (49) befindet:
- der Teil des verbesserten Videosignals (90), der dem Fahrer des Fahrzeugs (20) an dem ersten Zeitpunkt bereitgestellt wird, einer Bildinformation entspricht, die einem zweiten Ort der mehreren Orten (51, 52, 53) zugeordnet ist, dergestalt, dass das Fahrzeug (20) - an einem zweiten Zeitpunkt nach dem ersten Zeitpunkt - entweder an dem zweiten Ort fährt oder wahrscheinlich an dem zweiten Ort fahren wird,
- die mehreren Bildinformationen (81, 82, 83) aus den mehreren Strömen von Videosignalen (71, 72, 73) ausgewählt werden, und
- die mehreren Bildinformationen (81, 82, 83) in mehrere Teil-Videoströme (91, 92, 93) umgewandelt werden,
- die mehreren Teil-Videoströme (91, 92, 93) kombiniert werden, um in das verbesserte Videosignal (90) integriert zu werden,
wobei das Umwandeln der mehreren Bildinformationen (81, 82, 83) in mehrere Teil-Videoströme (91, 92, 93) umfasst, auf der Grundlage einer der mehreren Bildinformationen (81, 82, 83) und im Hinblick auf das Generieren eines einzelnen entsprechenden Teil-Videostroms der mehreren Teil-Videoströme (91, 92, 93) eine digitale Bildverarbeitungsfunktionalität durchzuführen, die dem Generieren eines Heranzoom-Effekts der durch die mehreren Kameravorrichtungen (61, 62, 63) generierten Videosignale entspricht, dergestalt, dass das verbesserte Videosignal (90) den Eindruck einer kontinuierlichen Bewegung, aus der Perspektive des Fahrers des Fahrzeugs (20) gesehen, vermittelt.

7. System nach Anspruch 6, wobei das System ein Telekommunikationsnetz (100), insbesondere ein Mobilkommunikationsnetz, umfasst, wobei das Telekommunikationsnetz (100) verwendet wird:
- um dem Fahrer des Fahrzeugs (20) das verbesserte Videosignal (90) bereitzustellen, wobei das Fahrzeug (20) eine mit dem Telekommunikationsnetz (100) verbundene Benutzerausrüstung (21) umfasst, und/oder
- um mindestens einen Teil der mehreren Videosignale (71, 72, 73) von den Kameravorrichtungen (61, 62, 63) an eine Netzentität des Telekommunikationsnetzes (100) zu senden, die die Auswahl der mehreren Bildinformationen (81, 82, 83) aus den mehreren Strömen von Videosignalen (71, 72, 73) bereitstellt und die mehreren Bildinformationen (81, 82, 83) in die mehreren Teil-Videoströme (91, 92, 93) umwandelt.

8. System nach einem der Ansprüche 6 und 7, wobei das Fahrzeug (20) ein spurgeführtes Fahrzeug, insbesondere ein Zug, ist, wobei sich das spurgeführte Fahrzeug (20) mit der gewissen Geschwindigkeit entlang einer Spur (22) bewegt, und wobei insbesondere der erste Ort (49) einem Ort entlang der Spur entspricht, der im Vergleich zu dem zweiten Ort sowie zu den mehreren Orten (51, 52, 53) spuraufwärts liegt.

9. Programm, umfassend einen computerlesbaren Programmcode, der, wenn er auf einem sich mit dem Fahrzeug (20) bewegenden Computer oder in einer Netzentität des Telekommunikationsnetzes (100) ausgeführt wird, die die Auswahl der mehreren Bildinformationen (81, 82, 83) aus den mehreren Strömen von Videosignalen (71, 72, 73) bereitstellt und die mehreren Bildinformationen (81, 82, 83) in die mehreren Teil-Videoströme (91, 92, 93) umwandelt, oder teilweise auf dem sich mit dem Fahrzeug (20) bewegenden Computer und teilweise in der Netzentität des Telekommunikationsnetzes (100), die die Auswahl der mehreren Bildinformationen (81, 82, 83) aus den mehreren Strömen von Videosignalen (71, 72, 73) und das Umwandeln der mehreren Bildinformationen (81, 82, 83) in die mehreren Teil-Videoströme (91, 92, 93) bereitstellt, den Computer oder die Netzentität des Telekommunikationsnetzes (100) veranlasst, ein Verfahren nach einem der Ansprüche 1 bis 5 durchzuführen.

10. Computerlesbares Medium zum Generieren eines verbesserten Videosignals (90) und zum Bereitstellen des verbesserten Videosignals (90) für den Fahrer eines Fahrzeugs (20), das sich mit einer gewissen Geschwindigkeit bewegt, wobei das Computerprogrammprodukt ein auf einem Speichermedium gespeichertes Computerprogramm umfasst, wobei das computerlesbare Medium Programmcode umfasst, der, wenn er auf einem sich mit dem Fahrzeug (20) bewegenden Computer oder in einer Netzentität des Telekommunikationsnetzes (100) ausgeführt wird, die die Auswahl der mehreren Bildinformationen (81, 82, 83) aus den mehreren Strömen von Videosignalen (71, 72, 73) bereitstellt und die mehreren Bildinformationen (81, 82, 83) in die mehreren Teil-Videoströme (91, 92, 93) umwandelt, oder teilweise auf dem sich mit dem Fahrzeug (20) bewegenden Computer und teilweise in der Netzentität des Telekommunikationsnetzes (100), die die Auswahl der mehreren Bildinformationen (81, 82, 83) aus den mehreren Strömen von Videosignalen (71, 72, 73) und das Umwandeln der mehreren Bildinformationen (81, 82, 83) in die mehreren Teil-Videoströme (91, 92, 93) bereitstellt, den Computer oder die Netzentität des Telekommunikationsnetzes (100) veranlasst, ein Verfahren nach einem der Ansprüche 1 bis 5 durchzuführen.

## Revendications

1. Procédé permettant de générer un signal vidéo amélioré (90) et de fournir le signal vidéo amélioré (90) au conducteur d'un véhicule (20) qui se déplace à une certaine vitesse, dans lequel, à un premier instant prédéterminé, le véhicule (20) est situé à un premier emplacement prédéterminé (49), dans lequel le signal vidéo amélioré (90) comprend une pluralité d'éléments d'information d'image (81, 82, 83) associés à une pluralité d'emplacements (51, 52, 53), dans lequel chacun de la pluralité d'éléments d'information d'image (81, 82, 83) se rapporte à l'un de la pluralité d'emplacements (51, 52, 53), dans lequel la partie du signal vidéo amélioré (90) qui est fournie au conducteur du véhicule (20) au premier instant correspond à une information d'image associée à un second emplacement parmi la pluralité d'emplacements (51, 52, 53) de telle sorte que le véhicule (20) - à un second instant subséquent au premier instant - soit se déplace au niveau du second emplacement, soit est susceptible de se déplacer au niveau du second emplacement,
dans lequel les éléments d'information d'image (81, 82, 83) font partie d'une pluralité de flux de signaux vidéo (71, 72, 73) générés par une pluralité de dispositifs de caméra (61, 62, 63) qui sont positionnés de manière fixe au niveau de la pluralité d'emplacements (51, 52, 53) ou liés à ceux-ci, dans lequel chacun de la pluralité d'éléments d'information d'image (81, 82, 83) correspond à l'un de la pluralité de flux de signaux vidéo (71, 72, 73) générés par l'un de la pluralité de dispositifs de caméra (61, 62, 63) ayant un champ de vision tel qu'au moins l'un de la pluralité d'emplacements (51, 52, 53) fait au moins en partie partie du champ de vision du dispositif de caméra respectif (61, 62, 63), dans lequel le procédé comprend les étapes suivantes :
- dans une première étape, la pluralité d'éléments d'information d'image (81, 82, 83) est sélectionnée parmi la pluralité de flux de signaux vidéo (71, 72, 73),
- dans une deuxième étape, subséquente à la première étape, la pluralité d'informations d'image (81, 82, 83) est convertie en une pluralité de flux vidéo partiels (91, 92, 93),
- dans une troisième étape, la pluralité de flux vidéo partiels (91, 92, 93) est combinée pour être intégrée dans le signal vidéo amélioré (90),
dans lequel l'étape de conversion de la pluralité d'éléments d'information d'image (81, 82, 83) en une pluralité de flux vidéo partiels (91, 92, 93) comprend - sur la base d'un élément de la pluralité d'éléments d'information d'image (81, 82, 83), et en vue de générer un flux vidéo partiel correspondant de la pluralité de flux vidéo partiels (91, 92, 93), - l'effectuation d'une fonctionnalité de traitement d'image numérique correspondant à la création d'un effet de zoom avant des signaux vidéo générés par la pluralité de dispositifs de caméra (61, 62, 63) de telle sorte que le signal vidéo amélioré (90) donne l'impression d'un mouvement continu vu du point de vue du conducteur du véhicule (20).

2. Procédé selon la revendication 1, dans lequel un réseau de télécommunication (100), en particulier un réseau de communication mobile, est utilisé
- pour fournir le signal vidéo amélioré (90) au conducteur du véhicule (20), le véhicule (20) comprenant un équipement utilisateur (21) connecté au réseau de télécommunications (100) et/ou
- pour transmettre au moins une partie de la pluralité de signaux vidéo (71, 72, 73) provenant des dispositifs de caméra (61, 62, 63) à une entité réseau du réseau de télécommunications (100) assurant la sélection de la pluralité d'éléments d'information d'image (81, 82, 83) parmi la pluralité de flux de signaux vidéo (71, 72, 73) et convertissant la pluralité d'éléments d'information d'image (81, 82, 83) en la pluralité de flux vidéo partiels (91, 92, 93) .

3. Procédé selon l'une des revendications précédentes, dans lequel le véhicule est un véhicule terrestre guidé, en particulier un train, dans lequel le véhicule terrestre guidé (20) se déplace à une certaine vitesse le long d'une voie (22), et dans lequel en particulier le premier emplacement (49) correspond à un emplacement le long de la voie qui est en amont par rapport au second emplacement ainsi que par rapport à la pluralité d'emplacements (51, 52, 53).

4. Procédé selon l'une des revendications précédentes, dans lequel la distance entre le premier emplacement (49) et le second correspond
- à une distance prédéfinie ou à une plage de distance prédéfinie, ou
- à un temps de déplacement prédéfini du véhicule (20) entre le premier emplacement (49) et le second emplacement en fonction de la vitesse actuelle du véhicule (20).

5. Procédé selon l'une des revendications précédentes, dans lequel la pluralité de flux de signaux vidéo (71, 72, 73), respectivement, correspond à des signaux vidéo de dispositifs positionnés de manière fixe, chaque dispositif ayant une perspective constante par rapport à l'emplacement respectif de la pluralité d'emplacements (51, 52, 53), et fournissant un signal vidéo correspondant à la perspective constante.

6. Système permettant de générer un signal vidéo amélioré (90) et de fournir le signal vidéo amélioré (90) au conducteur d'un véhicule (20) qui se déplace à une certaine vitesse, dans lequel le système comprend le véhicule (20) et une pluralité de dispositifs de caméra (61, 62, 63), dans lequel le signal vidéo amélioré (90) comprend une pluralité d'éléments d'information d'image (81, 82, 83) associés à une pluralité d'emplacements (51, 52, 53), dans lequel chacun de la pluralité d'éléments d'information d'image (81, 82, 83) se rapporte à l'un de la pluralité d'emplacements (51, 52, 53), dans lequel les éléments d'information d'image (81, 82, 83) font partie d'une pluralité de flux de signaux vidéo (71, 72, 73) générés par la pluralité de dispositifs de caméra (61, 62, 63) qui sont positionnés de manière fixe au niveau de la pluralité d'emplacements (51, 52, 53) ou liés à ceux-ci, dans lequel chacun de la pluralité d'éléments d'information d'image (81, 82, 83) correspond à l'un de la pluralité de flux de signaux vidéo (71, 72, 73), la pluralité de dispositifs de caméra (61, 62, 63) ayant un champ de vision tel qu'au moins l'un de la pluralité d'emplacements (51, 52, 53) fait au moins en partie partie du champ de vision du dispositif de caméra respectif (61, 62, 63), dans lequel le système est configuré de telle sorte que, pendant que le véhicule (20) est situé - à un premier instant prédéterminé - à un premier emplacement prédéterminé (49) :
- la partie du signal vidéo amélioré (90) qui est fournie au conducteur du véhicule (20) au premier instant correspond à une information d'image associée à un second emplacement de la pluralité d'emplacements (51, 52, 53) de telle sorte que le véhicule (20) - à un second instant subséquent au premier instant - soit se déplace au niveau du second emplacement, soit est susceptible de se déplacer au niveau du second emplacement, -- la pluralité d'éléments d'information d'image (81, 82, 83) étant sélectionnée parmi la pluralité de flux de signaux vidéo (71, 72, 73), et
- la pluralité d'éléments d'information d'image (81, 82, 83) étant convertie en une pluralité de flux vidéo partiels (91, 92, 93),
- la pluralité de flux vidéo partiels (91, 92, 93) étant combinée pour être intégrée dans le signal vidéo amélioré (90),
dans lequel la conversion de la pluralité d'éléments d'information d'image (81, 82, 83) en une pluralité de flux vidéo partiels (91, 92, 93) comprend - sur la base d'un élément de la pluralité d'éléments d'information d'image (81, 82, 83), et en vue de générer un flux vidéo partiel correspondant de la pluralité de flux vidéo partiels (91, 92, 93), - l'effectuation d'une fonctionnalité de traitement d'image numérique correspondant à la création d'un effet de zoom avant des signaux vidéo générés par la pluralité de dispositifs de caméra (61, 62, 63) de telle sorte que le signal vidéo amélioré (90) donne l'impression d'un mouvement continu vu du point de vue du conducteur du véhicule (20).

7. Système selon la revendication 6, dans lequel le système comprend un réseau de télécommunications (100), en particulier un réseau de communications mobiles, dans lequel le réseau de télécommunications (100) est utilisé
- pour fournir le signal vidéo amélioré (90) au conducteur du véhicule (20), le véhicule (20) comprenant un équipement utilisateur (21) connecté au réseau de télécommunications (100) et/ou
- pour transmettre au moins une partie de la pluralité de signaux vidéo (71, 72, 73) provenant des dispositifs de caméra (61, 62, 63) à une entité réseau du réseau de télécommunications (100) assurant la sélection de la pluralité d'éléments d'information d'image (81, 82, 83) parmi la pluralité de flux de signaux vidéo (71, 72, 73) et convertissant la pluralité d'éléments d'information d'image (81, 82, 83) en la pluralité de flux vidéo partiels (91, 92, 93) .

8. Système selon les revendications 6 ou 7, dans lequel le véhicule est un véhicule terrestre guidé, en particulier un train, dans lequel le véhicule terrestre guidé (20) se déplace à une certaine vitesse le long d'une voie (22), et dans lequel en particulier le premier emplacement (49) correspond à un emplacement le long de la voie qui est en amont par rapport au second emplacement ainsi que par rapport à la pluralité d'emplacements (51, 52, 53).

9. Programme comprenant un code de programme lisible par ordinateur qui, lorsqu'il est exécuté sur un ordinateur déplacé avec le véhicule (20) ou sur une entité réseau du réseau de télécommunications (100) assurant la sélection de la pluralité d'éléments d'information d'image (81, 82, 83) parmi la pluralité de flux de signaux vidéo (71, 72, 73) et convertissant la pluralité d'éléments d'information d'image (81, 82, 83) en la pluralité de flux vidéo partiels (91, 92, 93), ou en partie sur l'ordinateur déplacé avec le véhicule (20) et en partie sur l'entité réseau du réseau de télécommunications (100) assurant la sélection de la pluralité d'éléments d'information d'image (81, 82, 83) parmi la pluralité de flux de signaux vidéo (71, 72, 73) et la conversion de la pluralité d'éléments d'information d'image (81, 82, 83) en la pluralité de flux vidéo partiels (91, 92, 93), amène l'ordinateur ou l'entité réseau du réseau de télécommunications (100) à mettre en œuvre un procédé selon l'une des revendications 1 à 5.

10. Support lisible par ordinateur pour générer un signal vidéo amélioré (90) et fournir le signal vidéo amélioré (90) au conducteur d'un véhicule (20) qui se déplace à une certaine vitesse, le produit-programme d'ordinateur comprenant un programme d'ordinateur stocké sur un support de stockage, le support lisible par ordinateur comprenant un code de programme qui, lorsqu'il est exécuté sur un ordinateur déplacé avec le véhicule (20) ou sur une entité réseau du réseau de télécommunications (100) assurant la sélection de la pluralité d'éléments d'information d'image (81, 82, 83) parmi la pluralité de flux de signaux vidéo (71, 72, 73) et convertissant la pluralité d'éléments d'information d'image (81, 82, 83) en la pluralité de flux vidéo partiels (91, 92, 93), ou en partie sur l'ordinateur déplacé avec le véhicule (20) et en partie sur l'entité réseau du réseau de télécommunications (100) assurant la sélection de la pluralité d'éléments d'information d'image (81, 82, 83) parmi la pluralité de flux de signaux vidéo (71, 72, 73) et la conversion de la pluralité d'éléments d'information d'image (81, 82, 83) en la pluralité de flux vidéo partiels (91, 92, 93), amène l'ordinateur ou l'entité réseau du réseau de télécommunications (100) à mettre en œuvre un procédé selon l'une des revendications 1 à 5.
